# EUROPEAN PATENT SPECIFICATION

(11) **EP 4 583 698 B1**
(45) Date of publication and mention of the grant of the patent: **03.06.2026**
(21) Application number: 23764953.8
(22) Date of filing: 05.09.2023
(51) Int. Cl.: A01J 27/00, A23C 19/16, G09F 3/00, A23C 19/06, G09F 3/02

(54) **PROCESS FOR THE PREPARATION OF SHAPED FOIL-PACKAGED RINDLESS CHEESE**
VERFAHREN ZUR HERSTELLUNG VON GEFORMTEM, FOLIENVERPACKTEM KÄSE OHNE RINDE
PROCÉDÉ DE PRÉPARATION DE FROMAGE SANS CROÛTE EMBALLÉ DANS UNE FEUILLE FORMÉE

(30) Priority: 06.09.2022 EP 22194059
(43) Date of publication of application: 16.07.2025
(73) Proprietor: FrieslandCampina Nederland B.V., 3818 LE Amersfoort (NL)
(72) Inventor: TJERKSTRA, Douwe, 6708 WH Wageningen (NL); DIJKSTRA, Anne Liudger, 6708 WH Wageningen (NL)
(74) Representative: FrieslandCampina IP Department
(86) International application number: PCT/EP2023/074321
(87) International publication number: WO 2024/052341

(56) References cited:
- WO-A2-2021/255144
- FR-A1- 2 717 939
- FR-A1- 3 013 562
- COULSON J ET AL: "HERSTELLUNG VON KASE HOHER QUALITAT MIT NIEDRIGEM FETTGEHALT", MILCHWISSENSCHAFT, VV GMBH VOLKSWIRTSCHAFTLICHER VERLAG. MUNCHEN, DE, vol. 46, no. 11, 1 January 1991 (1991-01-01), pages 741, XP000213869, ISSN: 0026-3788

## Description

### FIELD OF THE INVENTION

The invention relates to a process for the preparation of shaped foil-packaged rindless cheese products.

### BACKGROUND TO THE INVENTION

Foil-ripening of cheeses is a well-known technique for producing rindless cheeses of the hard and half-hard type, such as Gouda cheeses. Such foil-ripening typically involves packaging the rindless cheese immediately after brining in a foil and subsequently allowing the cheese to ripen inside the foil at a temperature which is usually between 4 and 20 °C for a period of a few weeks (typically at least 4 weeks and not more than 3 months). A starter culture is typically added to the cheese milk from which the cheese curd is made to induce the ripening inside the foil. The foil used to wrap around or pack the freshly brined cheese typically is a water- and oxygen-impermeable multi-layer foil, although foils that are permeable for oxygen and water are also sometimes used. Foil-packaged rindless cheese is normally produced as blocks in the shape of cuboids. Such blocks can be easily stacked and stored for ripening. However, other shapes can be produced too. The packaged cheese blocks are usually transported and subsequently used, after removing the foil, for further processing, such as melting, cutting, grating or slicing. A main advantage of foil-ripened or rindless cheese products is that they can be conveniently sliced or cut without any product loss and no maintenance of the cheese (e.g. coating and turning) is needed as is the case with traditionally ripened cheese.

In industrial production it is important to periodically clean and check the production equipment for quality assurance purposes, e.g. to avoid microbiological contamination and ensure optimum quality of the products produced. Actual production, accordingly, takes place in the period between two successive cleaning operations. During such period different types of cheese could be produced, usually depending on orders placed and production planning. When switching from one type of cheese to another during production some intermediate cleansing of equipment may also be required. Typical equipment used in a commercial scale facility for producing foil-packaged rindless cheese include cheese vats, draining columns or blockforming towers (when producing block-shaped cheeses), moving belts, cheese molds, presses, brining baths, brining cages and packaging machines.

The following expressions used herein have the meanings indicated. "Rindless cheese" refers to the cheese that after brining is packed into a foil for ripening.

"Type of cheese" means cheese that is produced according to a specific recipe (including coagulant, starter and cheese milk) and using specific process settings. For example, according to this definition 48+ Gouda cheese and 30+ Gouda cheese (having respectively fat contents of 48% by weight and 30% by weight based on dry matter) are different types of cheese, as they are prepared from different cheese milks, namely cheese milks having different fat contents.

"Production batch" is the amount of a single type of cheese produced within one production run.

"Production run" means the amount of cheese produced between two consecutive slots for cleaning the production equipment.

"Cheese vat" is the vat or tank in which the cheese milk is converted into a semisolid gel (i.e. curd) through the action of the coagulant. Depending on which type of cheese vat is used, a cheese vat represents a certain amount of one single type of cheese that is produced from the cheese milk in such cheese vat.

"Cheese mold" is the mold in which the curd is put and pressed to give the cheese its desired shape. This could, for instance, be a block mold to make block-shaped cheese (particularly for foil-ripened cheese) or a cylinder mold to make wheel-shaped cheese.

A production run may comprise multiple production batches, whereas a production batch may be produced in multiple cheese vats. The curd from a cheese vat may be drained via one or multiple draining columns or other means to separate whey from the curd, whilst each draining column or other whey separation means will fill multiple cheese molds. In other words, a production run consists of a minimum of one production batch, whereas a production batch requires the use of at least one cheese vat. The number of different production batches and the size of each of such production batches within a single production run may vary as desired and will usually depend on the different types of cheese and quantities of each of such type of cheese required.

Each foil-packaged rindless cheese product is provided with a label or other form of printed information on the outside of the foil which gives certain information on the production history of the cheese. This production information may be provided in a variety of different forms. It could, for example, be provided in the form of machine readable code (e.g. as a barcode or quick response (QR) code) or in the form of a set of data (e.g. batch number, serial number, date and time of packaging etc) or as a combination of both. The level of detail provided by the (coded) production information on the cheese product may vary, but typically will enable to identify the production run and production batch in which the product was produced, the sequence number within a batch and date of production (i.e. packaging). Such information is important, because in case of any defects in the product, the information on such label enables to identify the production batch and possibly an entire production run that may have the same defect and hence should not be further distributed or, if already distributed, should be recalled.

Secondly, the production information provided with each cheese product may help to trace back to some extent which pieces of equipment were used to produce the defect product and thus what could be the cause of any defect, more specifically at what stage of the production process the defect may have arisen and/or what piece(s) of equipment malfunctioned and need repair or replacement. However, it is usually possible to trace back only by approximation from which cheese vat the base curd originates and which cheese mold was used to shape and press the defect cheese product. Identifying exactly which whey draining device was used, for instance, is difficult if possible at all. Accordingly, in case of any defect in the cheese product, the exact cause of such defect can only be traced back by approximation, so that the production and processing of a complete production batch should be analyzed which involves multiple whey draining devices, cheese molds, cheese presses and possibly brining cages. This implies not only that in case of a serious defect multiple pieces of equipment used in the production process should be checked, but also that a large amount of cheeses cannot be distributed or must be recalled in order to be sure that no defective cheeses enter or remain in the market place. Hence, there is a need for a more accurate method for tracing back the production of an individual foil cheese product. Such method is provided by the present invention.

FR 2717939 A1 discloses an identification plate for a food produced by fermentation, consisting of a casein-based supporting layer which is at least partially buried in the upper surface of the food product and has at least one label attached to its exposed surface.

### SUMMARY OF THE INVENTION

The present invention, accordingly, relates to a process for the preparation of at least one production batch of shaped foil-packaged rindless cheese products wherein each cheese mold is provided with a unique identifier detectable from the outside of the cheese mold and with a unique identifier on its inner surface which is linked to the earlier mentioned identifer and which leaves a mold-specific mark on the outer surface of the shaped cheese product when pressed inside the cheese mold. This mold-specific mark is read by suitable detection means after brining. The information linked to both identifiers is combined, stored and translated into a unique product identifier which applied onto the outside of the foil packaging of the shaped rindless foil-packaged cheese product. This product identifier enables exact identification of the pieces of equipment used to produce the cheese product in question and hence can be used to accurately trace back the cause of any defect in the cheese product in case such defect would occur.

### DETAILED DESCRIPTION OF THE INVENTION

As indicated above, the present invention relates to a process for the preparation of at least one production batch of shaped foil-packaged rindless cheese products which process comprises forming a curd in at least one cheese vat, separating whey from the curd by whey separation means, shaping and pressing the curd into shaped rindless cheese products using multiple cheese molds, brining the shaped rindless cheese products and packaging the shaped rindless cheese products into foil, wherein
(i) each cheese mold is provided with
   - a unique identifier detectable from the outside of the cheese mold ("identifier 1"); and
   - a unique identifier on its inner surface which is linked to identifier 1 and leaves a cheese mold-specific mark on the outer surface of the shaped cheese product when pressed inside the cheese mold ("identifier 2");
(ii) identifier 1 of each cheese mold is detected by detection means and the resulting cheese mold-specific data is linked to specific data that identify the production batch, the specific whey separation means used to separate whey from the curd used in the specific cheese mold and the cheese vat used to prepare this curd ("dataset 1");
(iii) identifier 2 is detected on each shaped rindless cheese product by detection means after brining and the resulting cheese mold-specific data is matched with dataset 1 of the same cheese mold resulting in a dataset which identifies for each shaped rindless foil-packaged cheese product the specific production batch and the specific cheese mold, whey separation means and cheese vat used to prepare such shaped rindless foil-packaged cheese product ("dataset 2"); and
(iv) dataset 2 is stored and translated into a unique identifier ("product identifier") which is applied onto the outside of the shaped rindless foil-packaged cheese product.

The typical process for producing foil-packaged rindless cheese (also referred to as "foil-ripened" cheese), is well known. In general, a starter bacteria culture is added to pasteurized milk to enable fermentation of lactose into lactic acid and possibly other compounds that may impart a characteristic taste to the cheese. The choice of the starter culture to a large extent determines the final characteristics of the cheese obtained. The casein is coagulated, usually by adding a coagulant such as rennet. The resulting cheese milk is allowed to form curd. Once the cheese curd has been formed, the curd is cut, the whey is separated in one or more steps, the curd is shaped into blocks (or other shapes, if desired) and the resulting cheese curd blocks are brined, usually by one or more immersions in a salt solution, and subsequently packaged in foil. Suitable foils are well known and typically are essentially impermeable for oxygen and water, in particular outside in, or their permeability for oxygen and water is very limited. In some cases, however, foils which are more permeable for oxygen and water may also be used, in particular when it is desired to allow water to evaporate from the ripening cheese. Optionally, washing with water may take place between brining and packaging in foil, usually by simply spraying the brined cheese with water or immersing the freshly brined cheese block in a water bath. Ripening subsequently takes place inside the foil, typically for a period of at least 4 weeks, at a temperature between 4 and 20 °C. Several variations may be possible, but generally the foil-ripening process is carried out as described above. The packed rindless cheese can be used for further processing, such as melting, cutting, grating or slicing. In case of packed rindless cuboid-shaped cheese blocks, typically having a weight between 12 and 16 kilograms, the cheese blocks may be unpackaged after having ripened for some time, cut into smaller blocks and such smaller blocks can then be repacked for onward use and/or sale.

The rindless cheese products are typically block-shaped (i.e. a cuboid-shaped block), but other shapes are possible too, for example wheel-shaped or spherically-shaped. Most foil-packaged rindless cheese products, however, are block-shaped when produced. This is also a preferred embodiment of the present invention. Typically, such rindless cheese blocks have a weight between 12 and 16 kilograms, but smaller blocks could be produced too, either directly or indirectly by re-packing large blocks after cutting them into smaller blocks.

When applied on an industrial scale several pieces of equipment are used in the successive stages of the process for producing foil-packaged rindless cheese. The curd is typically formed in a cheese vat. The cheese vat is filled with cheese milk and upon adding a coagulant the curd is formed. Starter cultures are usually added to induce fermentation of lactose, thereby imparting taste to the cheese. Once the curd has formed in the cheese vat, the cheese vat contains a curd/whey mixture: a gel-like substance which essentially consists of the curd with whey entrapped in its structure and circulating around the gel-structure. This curd/whey mixture is then transferred to whey separation means where most of the whey is separated from the curd. Before and/or during such transfer some of the whey may already be separated, whilst washing water is usually added to facilitate whey removal and wash the curd. Such whey separation means are well known and include whey draining columns, which may be integrated in blockforming whey draining towers. Generally, the curd/whey mixture enters at the top of the whey draining column and on its way down whey is drained through one or more perforated sections and removed, whilst the more and more whey-depleted curd is progressively compressed on its way down the draining tower. The curd exiting at the bottom of the draining column is placed in a cheese mold for (pre-)pressing in the desired shape and removing further whey. Once pressed, the curd can be further referred to as rindless cheese. For the purpose of the present invention it is preferred that the whey separation means comprise at least two whey draining columns, preferably blockforming whey draining towers. Acordingly, in this process multiple whey draining columns can be filled from one cheese vat, optionally via a buffer tank, whilst from one whey draining column multiple cheese molds are filled. The rindless cheese is removed from its mold and brined. Such brining typically takes place by loading a brining cage with rindless cheeses and lowering the brining cage in a brine bath. Size of the brining bath and cage may vary within wide limits, but it is not uncommon that brining cages contain up to 3000 cheeses. In any event such brining cage may contain different types of cheese produced in different production batches. Typically a brining cage is loaded from the bottom rows upward. Once a row is loaded, it is lowered into the brining bath and the next row is loaded and lowered into the brining bath. This procedure continues until all rows are loaded and lowered into the brining bath. That implies that cheeses loaded in the lower parts of the brining cage spend more time in the brining bath than the cheeses loaded in the upper parts. In fact the principle "first in, last out" applies in this connection. After brining the rindless cheeses are washed and packaged in foil for ripening.

Packaging the rindless cheese in foil can take place in many different ways. The type of packaging used will, inter alia, depend on required shelf-life of the cheese. For example, if immediate use for consumption purposes is envisaged and hence a longer shelf-life is not required, packing could take place by simply wrapping the rindless cheese block in a flexible foil or placing the cheese block in a pre-shaped, more rigid type of packaging that can subsequently be sealed. If, on the other hand, a longer shelf-life is required, the rindless cheese is usually packed under vaccuum, so that the amount of oxygen that can get in touch with the cheese's outer surface is minimized. This is important to avoid microbial contamination, such as the formation of fungus on the cheese. Such fungus is visually very unappealing, whicst microbial contamination in general may deteriorate the quality of cheese, including its organoleptic properties. Packing the rindless cheese under vacuum in a flexible foil, typically thermoformable films, is well known. Packaging machines for packing food products, such as cheese, under vacuum are widely commercially available.

In the process of the present invention each cheese mold is provided with a unique identifier detectable from the outside of the cheese mold (i.e. "identifier 1" as described above). This identifier 1 could be any type of sign capable of uniquely identifying each cheese mold used in the process. For example, identifer 1 could consist of a sign comprising at least one number and/or at least one letter, printed on or engraved into the outer wall of the cheese mold or otherwise attached to the outer wall of the cheese mold, e.g. on a label attached to the outer wall of the cheese mold, engraved into the outer wall of the cheese mold or on a printed (metal) plate secured onto such outer wall. Identifier 1 could also comprise a QR code, barcode or data matrix code or a RFID (Radio Frequency Identification) tag. Any available detection means for detecting identifier 1 could be used. The detection means selected will depend on the type of sign used as identifier 1. Electronic detection means are preferred, so that each cheese mold can be identified and digitally linked to its associated dataset. Suitable detection means, accordingly, include vision sensor cameras and RFID readers as well as scanners or readers for QR codes, barcodes or data matrix codes. Such detection equipment and software enabling reading QR codes, barcodes or data matrix codes (e.g. in de form of apps) are commonly available.

In an alternative embodiment identifier 1 is a unique code readable from a chip which is embedded in the wall of the cheese mold or attached to the inner or outer wall of the cheese mold. Suitable detection means used to read identifier 1 in this case is any scanner capable of reading the information from the chip.

Once detected and recorded the resulting cheese mold-specific data is linked to specific data that identify the production batch which is being produced, the passage number of the specific cheese mold in the production batch (i.e. if a specific mold is used multiple times during a production batch, the passage number indicates for the how manieth time such cheese mold is detected during this production batch), the specific whey separation means used to separate whey from the curd that is used to fill the specific cheese mold during its passage and the cheese vat that was used to prepare this curd. This information is combined in the aforesaid dataset 1. Dataset 1 now identifies critical equipment used to produce the curd that is being processed in the specific cheese mold in question. The present invention enables linking this information of dataset 1 very accurately to the rindless cheese product which is packed in foil, so that for each end product (i.e. the foil-packaged rindless cheese product) the exact production history and equipment used can be traced back.

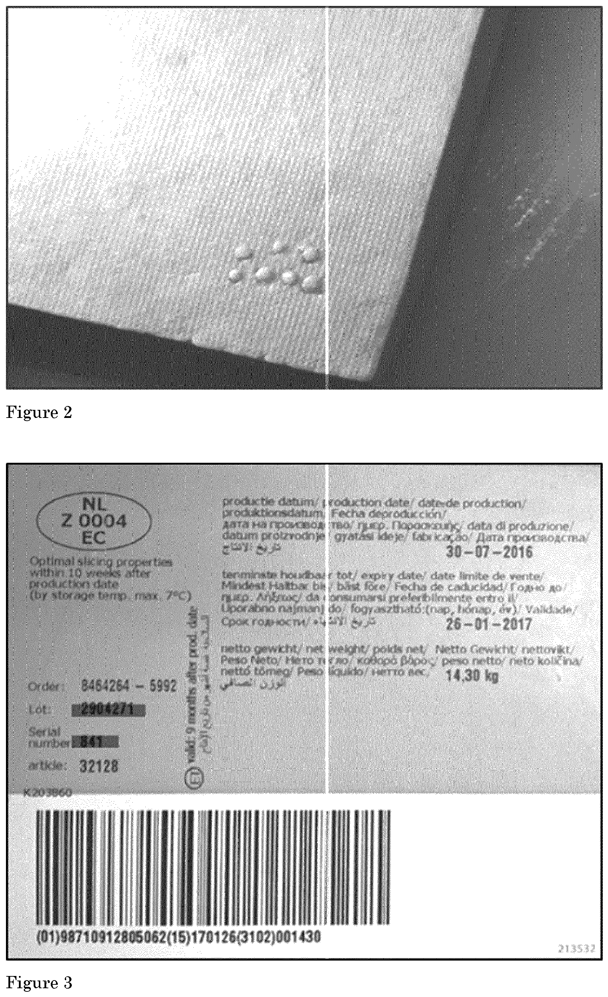

A key feature in enabling such tracing back is that, in addition to identifier 1, each cheese mold is also provided with a unique identifier on its inner surface which is linked to identifier 1 and leaves a cheese mold-specific mark on the outer surface of the shaped cheese product when pressed inside the cheese mold (i.e. "identifier 2" as described above). Identifier 2 can take the form of any sign capable of uniquely identifying the cheese mold in question. Accordingly, it could be at least one number (e.g. in arabic and/or roman numbers) and/or at least one letter or a combination of both. It could also be any other code or sign, as long it can be used to uniquely identify the cheese mold in question. Identifier 2 should be applied in such manner to the inner wall of each cheese mold that it leaves a mark on the shaped cheese product when such cheese product is pressed inside the cheese mold. An example is given in Figure 2. Accordingly, in one embodiment identifier 2 is a cheese mold-specific, unique engraving in the inner wall of the cheese mold which leaves a corresponding protrusive mark on the outer surface of the shaped cheese product when such cheese product pressed inside the cheese mold. In an alternative embodiment identifier 2 is a cheese mold-specific protrusive mark applied onto the inner wall of the cheese mold, thus leaving a corresponding, cheese mold-specific, engraving on the outer surface of the shaped cheese product when such cheese product is pressed inside the cheese mold. From a practical viewpoint it is preferred that identifier 2 is a cheese mold-specific, unique engraving in the inner wall of the cheese mold. Such engraving can be applied to existing cheese molds, thus making it easier to use in existing processes and avoid having to make or purchase new molds.

Detection of the cheese mold-specific mark on the outer surface of the shaped cheese product takes place after brining. In principle such detection could take place after packaging the shaped cheese product in foil, but it is preferred that the cheese mold-specific mark corresponding with identifier 2 is detected after brining and before packaging the shaped rindless cheese product into foil. In this way an accurate detection is ensured and any deviations that could possibly be caused by the foil are avoided.

The cheese mold-specific mark on the outer surface of the shaped cheese product corresponding with identifier 2 can be read by any means capable of detecting such mark. The resulting cheese mold-specific data is matched with identifier 1 and hence with dataset 1 of the same cheese mold resulting in a dataset which identifies for each shaped rindless foil-packaged cheese product the specific production batch and the specific cheese mold, passage number (if applicable), whey separation means and cheese vat used to prepare such shaped rindless foil-packaged cheese product. This latter dataset is the aforesaid dataset 2.

In a preferred embodiment the detection means used to detect the cheese mold-specific mark on the outer surface of the shaped cheese product is a vision sensor camera or a laser-based 3D scanner. By using such camera or scanner the image detected can be digitally recorded and conveniently linked to identifier 1 and thereby to dataset 1 of the same cheese mold, thus creating dataset 2.

As described above vision sensor cameras (also referred to as vision sensor camera system) may be used to detect identifier 1 and identifier 2. Such vision sensor camera systems are known in the art and commercially available from different vendors, such as e.g. Sick AG, Cognex, Keyence International, Omron, Baumer, Basler, Balluff, Teledyne, Ifm Electronic and Tektron. Generally, such vision sensor camera system comprises at least one light source, an image sensor to detect reflected light and means to convert the reflected light detected into an image. The vision sensor camera system is programmed to take an image when the product is at a specific location within the sensor's field of view. The image captured is then analysed by comparing it with a reference image or reference characteristics stored in its memory that can be used to identify the image captured. For the purpose of the present invention a 2D vision sensor camera system could be used to accurately detect the identifier on the outer wall of a cheese mold in case of identifier 1 and on the outer surface of the shaped rindless cheese product in case of identifier 2.

In the process of the present invention the vision sensor system is placed in such position relative to the cheese mold or shaped rindless cheese product that the imaging sensor of the vision sensor camera system can detect the reflected light from the cheese mold or shaped rindless cheese product which is illuminated by the light source(s). An image of the surface is then created and analyzed by identifying the surface of these regions. This image is then translated into identifier 1 or identifier 2, respectively.

Laser-based 3D scanners are also commercially available and use laser triangulation to accurately capture a 3D image (in this case identifier 2). Such scanner would be very useful for detecting the cheese mold-specific mark corresponding with identifier 2 of the cheese mold in question on the rindless cheese's outer surface. In general, a laser line is projected onto the cheese surface that contains the ceese mold-specific mark at a known angle, while the cheese moves in one direction underneath the laser line (typically horizontally by means of a moving belt on which the cheese is placed). Alternatively, the cheese does not move while the laser line sweeps along the cheese surface. A camera views the projected image of the cheese mold-specific mark on the cheese surface (i.e. it captures the reflected laser light) and translates it into identifier 2. As described above, this identifier 2 is then linked to identifier 1 and corresponding dataset 1, thereby creating dataset 2.

Once created, dataset 2 is stored and translated into a unique identifier -the product identifier- which is subsequently applied onto the outside of the shaped rindless foil-packaged cheese product. As indicated earlier, this product identifier could be printed on a label which is applied onto the outer surface of the foil-packaged rindless cheese product or it is printed directly onto the outer surface of the foil in which the rindless cheese product is packaged. The product identifier could be provided in any form suitable for uniquely identifying the rindless cheese product in question and its production history. Accordingly, such product identifier could suitably be provided in the form of machine readable code (e.g. as a barcodeor QR code) or in the form of a set of data (e.g. batch number, serial number, date and time of packaging etc) or as a combination of both. In a preferred embodiment the product identifier comprises at least a batch number for identifying the batch and a serial number for identifying the specific cheese vat, whey separation means and cheese mold used to prepare the shaped foil-packaged rindless cheese product.

The process as described above may suitably comprise the steps of
(a) preparation of at least one batch of a curd-whey mixture in at least one cheese vat, wherein a batch number is allocated to the batch;
(b) separating whey from the curd-whey mixture in multiple block-forming draining columns;
(c) transferring the resulting cheese blocks into block-shaped cheese molds, each cheese mold being provided with an identifier 1 and an identifier 2;
(d) detecting identifier 1 with suitable detection means and creating dataset 1 for each cheese mold;
(e) pressing the cheese blocks inside the molds;
(f) removing the cheese blocks from the molds;
(g) brining the cheese blocks;
(h) detecting the cheese mold-specific mark corresponding with identifier 2 on each cheese block with suitable detection means and creating dataset 2 for each cheese block;
(i) translating dataset 2 into a unique product identifier;
(j) packaging each rindless cheese block in foil; and
(k) applying the product identifier onto each foil-packaged rindless cheese block.

### DESCRIPTION OF FIGURES

Figure 1 shows a schematic exemplary set-up for carrying out the process of the present invention.
Figure 2 shows an example of a cheese mold-specific mark on a cheese blocks's outer surface that could be used to as a representation of identifier 2 of the specific cheese mold from which this cheese block originates. In this example the cheese mold-specific mark corresponding with identifier 2 of the cheese mold in question consists of a number of protrusive dots in a particular pattern.
Figure 3 shows an example of a typical label used in an existing cheese production process.

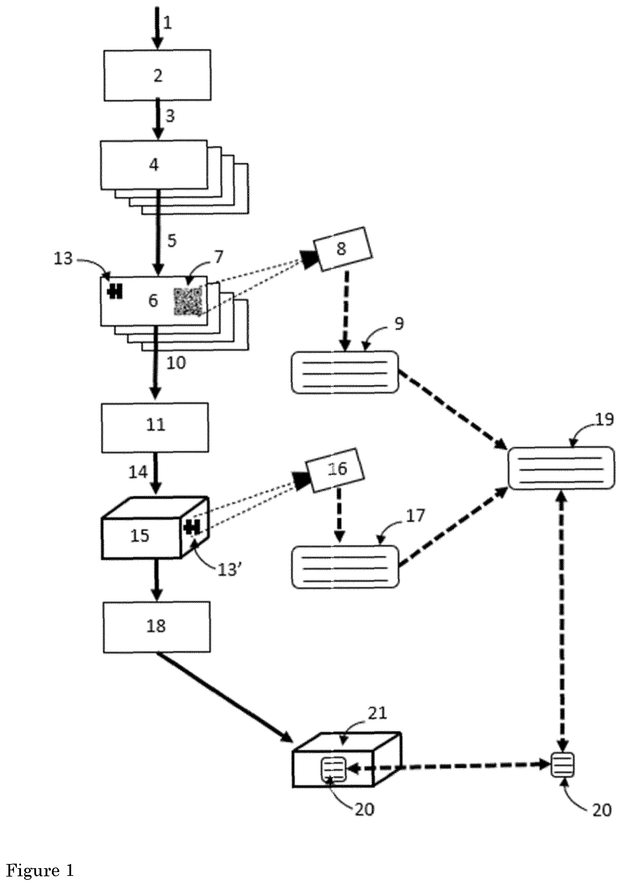

In Figure 1 cheese milk (1) enters cheese vat (2) where coagulation takes place. The resulting curd/whey mixture (3) is passed into multiple whey separation means (4) where is separated and the resulting curd (5) from each whey separation means (4) is put into multiple cheese molds (6), each provided with an identifier (7) detectable from the outside by detector (8). Detector (8) collects the date from each cheese mold (6) and stores the resulting cheese mold-specific dataset (9) containing information about the specific cheese vat (2) used, the specific whey separation means (4) used and the cheese mold (6) in question. Each cheese mold (6) is furthermore provided with a cheesemold-specific and unique engraving (13) on its inner wall leaving a corresponding protrusive mark (13') on the resulting cheese block upon pressing the curd into the cheese mold (6). The resulting cheese block (10) is subjected to brining in brine bath (11) and the brined cheese block (15) shows the protrusive mark (13'). This protrusive mark (13') is detected by detector (16) before being packaged in foil in foil-packing unit (18) resulting in the foil-packaged rindless cheese product (21). Detection of protrusive mark (13') by detector (16) results in a cheese block-specific dataset 2 (17), which is linked to dataset 1 (9) of the same cheese mold (6) from which the cheese block (15) originates, resulting in a combined dataset (19) which contains information about the cheese mold (6), whey separation means (4) and cheese vat (2) used in the production of cheese block (15). The combined dataset (19) with all product information is translated into product identifier information (20) which is put on the foil-packaged rindless cheese product (21). By means of product identifier (20) the complete dataset (19) of the cheese product (21) can be retrieved, which in return enables tracing back with high accuracy the production history of the cheese product (21), including the exact equipment used in the production of each cheese product (21).

### EXAMPLES

The invention is further illustrated by the following example.

An example of a classic label on a foil-packaged rindless cheese block is indicated in Figure 3. The key information for tracing back the equipment used are the Lot number and Serial number. "Lot" refers to the production batch number and "Serial number" refers to the number in that batch as assigned in order of removal from the brine bath. So in this particular case the cheese would be the 841th cheese block removed from the brine bath which was produced in the production batch with Lot number 2904271. Order number refers to the order (and hence client) for which this production batch is produced, while article number refers to the type of product.

From the Lot number it can be established in which production run and production batch the product was produced. This provides the time slot in which the product was produced. Per cheese vat it is registered which draining columns are filled from such vat and for each cheese mold it is logged from which draining columns it is filled. The cheese molds are numbered. From the Serial number it can be derived approximately when during the production batch the product was produced, because when the moment of removal of the product from the brine bath is known, it can be calculated back when it entered the brine bath and hence from which few cheese molds the rindless cheese could originate. That gives a small window of possible cheese molds that could have been used, which, in return, enables to determine which series of draining columns were used to fill those molds. Once these draining columns are identified, the one or two cheese vats from which these draining columns were filled are known. Hence, the current information on the label enables to identify a small window of equipment used in the production process, so that in case of a defect, a limited number of options regarding equipment used should be investigated. At the same time all product produced via such options should be recalled from a food safety perspective. This inevitably means that also good quality products are recalled together with the defect products. The amount of good quality product recalled should be kept to a minimum which would be possible, if the cause of the defect can be established with greater precision. With the method of the present invention more detailed production information can be linked to Lot and Serial number, so that per product it can be traced back exactly which equipment was used.

A cheese mold was provided at its inner surface with a series of engravings in the shape of dots by means of a laser. The engraved dots were applied in a pattern that could uniquely identify the cheese mold. During the production of a batch of rindless cheese blocks, a cheese block was pressed into the cheese mold to check whether the engraved dots would be visible on the other surface of the rindless cheese block when removed from the cheese mold. The result was a series of protrusive dots corresponding with the pattern of engraved dots in the cheese molds inner surface and is depicted in Figure 2. This illustrates a unique cheese mold-specific mark can be applied onto the cheese block's outer surface and can be identified with e.g. a 3D laser scanner.

## Claims

1. Process for the preparation of at least one production batch of shaped foil-packaged rindless cheese products which process comprises forming a curd in at least one cheese vat, separating whey from the curd by whey separation means, shaping and pressing the curd into shaped rindless cheese products using multiple cheese molds, brining the shaped rindless cheese products and packaging the shaped rindless cheese products into foil, wherein
(i) each cheese mold is provided with
- a unique identifier detectable from the outside of the cheese mold ("identifier 1"); and
- a unique identifier on its inner surface which is linked to identifier 1 and leaves a cheese mold-specific mark on the outer surface of the shaped cheese product when pressed inside the cheese mold ("identifier 2");
(ii) identifier 1 of each cheese mold is detected by detection means and the resulting cheese mold-specific data is linked to specific data that identify the production batch, the specific whey separation means used to separate whey from the curd used in the specific cheese mold and the cheese vat used to prepare this curd ("dataset 1");
(iii) the cheese mold-specific mark corresponding with identifier 2 is detected on each shaped rindless cheese product by detection means after brining and the resulting cheese mold-specific data is matched with dataset 1 of the same cheese mold resulting in a dataset which identifies for each shaped rindless foil-packaged cheese product the specific production batch and the specific cheese mold, whey separation means and cheese vat used to prepare such shaped rindless foil-packaged cheese product ("dataset 2"); and
(iv) dataset 2 is stored and translated into a unique identifier ("product identifier") which is applied onto the outside of the shaped rindless foil-packaged cheese product.

2. Process according to claim 1, wherein the shaped rindless foil-packaged cheese product is block-shaped.

3. Process according to claim 1 or 2, wherein the whey separation means comprise at least two whey draining columns, preferably blockforming whey draining towers.

4. Process according to any one of the preceding claims, wherein identifier 1 is a sign, preferably comprising at least one number and/or at least one letter, printed on or engraved into the outer wall of the cheese mold or otherwise attached to the outer wall of the cheese mold.

5. Process according to claim 4, wherein the detection means used to read identifier 1 is a vision sensor camera.

6. Process according to any one of claims 1-3, wherein identifier 1 is a unique code readable from a chip which is embedded in the wall of the cheese mold or attached to the inner or outer wall of the cheese mold.

7. Process according to claim 6, wherein the detection means used to read identifier 1 is a scanner suitable for reading the chip.

8. Process according to any one of the preceding claims, wherein identifer 2 is a cheese mold-specific, unique engraving in the inner wall of the cheese mold, which leaves a relief corresponding with identifier 2 on the outer surface of the shaped rindless cheese product when such cheese product is pressed inside the cheese mold.

9. Process according to any one of the preceding claims, wherein the cheese mold-specific mark corresponding with identifier 2 is read after brining and before packaging the shaped rindless cheese product into foil.

10. Process according to any one of the preceding claims, wherein the detection means to read the cheese mold-specific mark corresponding with identifier 2 is a vision sensor camera.

11. Process according to any one of the preceding claims, wherein the product identifier comprises a batch number for identifying the batch and a serial number for identifying the specific cheese vat, whey separation means and cheese mold used to prepare the shaped foilpckaged rindless cheese product.

12. Process according to any one of claims 1-10, wherein the product identifier is a QR code or barcode.

13. Process according to any one of the preceding claims comprising the steps of
(a) preparation of at least one batch of a curd-whey mixture in at least one cheese vat, wherein a batch number is allocated to the batch;
(b) separating whey from the curd-whey mixture in multiple block-forming draining columns;
(c) transferring the resulting cheese blocks into block-shaped cheese molds, each cheese mold being provided with an identifier 1 and an identifier 2;
(d) detecting identifier 1 with suitable detection means and creating dataset 1 for each cheese mold;
(e) pressing the cheese blocks inside the molds;
(f) removing the cheese blocks from the molds;
(g) brining the cheese blocks;
(h) detecting the cheese mold-specific mark corresponding with identifier 2 on each cheese block with suitable detection means and creating dataset 2 for each cheese block;
(i) translating dataset 2 into a unique product identifier;
(j) packaging each rindless cheese block in foil; and
(k) applying the product identifier onto each foil-packaged rindless cheese block.

## Patentansprüche

1. Verfahren zur Herstellung mindestens einer Produktionscharge von geformten, in Folie verpackten Käseprodukten ohne Rinde, wobei das Verfahren Folgendes umfasst: Bilden eines Käsebruchs in mindestens einem Käsebottich, Abtrennen der Molke von dem Käsebruch mittels Molkeabtrennmitteln, Formen und Pressen des Käsebruchs zu geformten Käseprodukten ohne Rinde unter Verwendung mehrerer Käseformen, Einlegen der geformten Käseprodukte ohne Rinde in Salzlake und Verpacken der geformten Käseprodukte ohne Rinde in Folie, wobei
(i) jede Käseform versehen ist mit
- einer eindeutigen Kennung, die von der Außenseite der Käseform detektiert werden kann ("Kennung 1"); und
- einer eindeutigen Kennung an ihrer Innenfläche, die mit der Kennung 1 verknüpft ist und eine käseformspezifische Markierung auf der Außenfläche des geformten Käseprodukts hinterlässt, wenn es in die Käseform eingepresst wird ("Kennung 2");
(ii) die Kennung 1 jeder Käseform durch Detektionsmittel detektiert wird und die resultierenden käseformspezifischen Daten mit spezifischen Daten verknüpft werden, die die Produktionscharge, die spezifischen Molkeabtrennmittel, die verwendet werden, um in der spezifischen Käseform die Molke von dem Käsebruch abzutrennen, und den Käsebottich, der verwendet wird, um diesen Käsebruch herzustellen, identifizieren ("Datensatz 1");
(iii) die käseformspezifische Markierung, die der Kennung 2 entspricht, nach dem Einlegen in Salzlake durch Detektionsmittel auf jedem Käseprodukt ohne Rinde detektiert wird und die resultierenden käseformspezifischen Daten mit dem Datensatz 1 derselben Käseform abgeglichen werden, woraus ein Datensatz resultiert, der für jedes geformte, in Folie verpacktes Käseprodukt ohne Rinde die spezifische Produktionscharge und die spezifische Käseform, Molkeabtrennmittel und Käsebottich, die verwendet werden, um ein derartiges geformtes, in Folie verpacktes Käseprodukt ohne Rinde herzustellen, identifiziert ("Datensatz 2"); und
(iv) der Datensatz 2 gespeichert und in eine eindeutige Kennung ("Produktkennung") übersetzt wird, die auf der Außenseite des geformten, in Folie verpackten Käseprodukts ohne Rinde aufgebracht wird.

2. Verfahren nach Anspruch 1, wobei das geformte, in Folie verpackte Käseprodukt ohne Rinde blockförmig ist.

3. Verfahren nach Anspruch 1 oder 2, wobei die Molkeabtrennmittel mindestens zwei Molkeablaufsäulen, bevorzugt blockbildende Molkeablauftürme umfassen.

4. Verfahren nach einem der vorhergehenden Ansprüche, wobei die Kennung 1 ein Zeichen ist, das bevorzugt mindestens eine Zahl und/oder mindestens einen Buchstaben umfasst und das auf die Außenwand der Käseform gedruckt oder darin eingraviert oder auf andere Art an der Außenwand der Käseform befestigt wird.

5. Verfahren nach Anspruch 4, wobei die Detektionsmittel, die verwendet werden, um die Kennung 1 auszulesen, eine Visionssensorkamera sind.

6. Verfahren nach einem der Ansprüche 1-3, wobei die Kennung 1 ein eindeutiger Code ist, der von einem Chip, der in der Wand der Käseform eingebettet ist oder an der Innen- oder Außenwand der Käseform befestigt ist, ausgelesen werden kann.

7. Verfahren nach Anspruch 6, wobei die Detektionsmittel, die verwendet werden, um die Kennung 1 auszulesen, eine Scan-Vorrichtung sind, die dafür geeignet ist, den Chip auszulesen.

8. Verfahren nach einem der vorhergehenden Ansprüche, wobei die Kennung 2 eine käseformspezifische, eindeutige Gravur in der Innenwand der Käseform ist, die ein Relief, das der Kennung 2 entspricht, auf der Außenfläche des geformten, Käseprodukts ohne Rinde hinterlässt, wenn ein derartiges Käseprodukt in die Käseform eingepresst wird.

9. Verfahren nach einem der vorhergehenden Ansprüche, wobei die käseformspezifische Markierung, die der Kennung 2 entspricht, nach dem Einlegen in Salzlake und vor dem Verpacken des geformten Käseprodukts ohne Rinde in Folie ausgelesen wird.

10. Verfahren nach einem der vorhergehenden Ansprüche, wobei die Detektionsmittel, um die käseformspezifische Markierung, die der Kennung 2 entspricht, auszulesen, eine Visionssensorkamera sind.

11. Verfahren nach einem der vorhergehenden Ansprüche, wobei die Produktkennung eine Chargennummer zum Kennzeichnen der Charge und eine Seriennummer zum Kennzeichnen des spezifischen Käsebottichs, der Molkeabtrennmittel und der Käseform, die verwendet werden, um das geformte, in Folie verpackte Käseprodukt ohne Rinde herzustellen, umfasst.

12. Verfahren nach einem der Ansprüche 1-10, wobei die Produktkennung ein QR-Code oder ein Strichcode ist.

13. Verfahren nach einem der vorhergehenden Ansprüche, das die folgenden Schritte umfasst:
(a) Herstellen von mindestens einer Charge einer Käsebruch-Molke-Mischung in mindestens einem Käsebottich, wobei der Charge eine Chargennummer zugewiesen wird;
(b) Abscheiden von Molke von der Käsebruch-Molke-Mischung in mehreren blockbildenden Ablaufsäulen;
(c) Übertragen der resultierenden Käseblöcke in blockförmige Käseformen, wobei jede Käseform mit einer Kennung 1 und einer Kennung 2 versehen wird;
(d) Detektieren der Kennung 1 mit geeigneten Detektionsmitteln und Erzeugen des Datensatzes 1 für jede Käseform;
(e) Einpressen der Käseblöcke in die Formen;
(f) Entfernen der Käseblöcke aus den Formen;
(g) Einlegen der Käseblöcke in Salzlake;
(h) Detektieren der käseformspezifischen Markierung, die der Kennung 2 entspricht, auf jedem Käseblock mit geeigneten Detektionsmitteln und Erzeugen des Datensatzes 2 für jeden Käseblock;
(i) Übersetzen des Datensatzes 2 in eine eindeutige Produktkennung;
(j) Verpacken jedes Käseblocks ohne Rinde in Folie; und
(k) Aufbringen der Produktkennung auf jeden in Folie verpackten Käseblock ohne Rinde.

## Revendications

1. Procédé pour la préparation d'au moins un lot de production de produits de fromage sans croûte mis en forme conditionnés sous film, le procédé comprenant la formation d'un caillé dans au moins une cuve de fromagerie, la séparation du lactosérum du caillé par des moyens de séparation du lactosérum, la mise en forme et le pressage du caillé en produits de fromage sans croûte mis en forme à l'aide de plusieurs moules à fromage, le saumurage des produits de fromage sans croûte mis en forme et le conditionnement sous film des produits de fromage sans croûte mis en forme, dans lequel
(i) chaque moule à fromage est pourvu des éléments suivants
- un identifiant unique détectable depuis l'extérieur du moule à fromage ("identifiant 1") ; et
- un identifiant unique sur sa surface intérieure, lequel est lié à l'identifiant 1 et laisse une marque spécifique au moule à fromage sur la surface extérieure du produit de fromage mis en forme lors du pressage à l'intérieur du moule à fromage ("identifiant 2") ;
(ii) l'identifiant 1 de chaque moule à fromage est détecté par des moyens de détection et les données spécifiques au moule à fromage ainsi obtenues sont liées à des données spécifiques identifiant le lot de production, les moyens de séparation du lactosérum spécifiques utilisés pour séparer le lactosérum du caillé utilisé dans le moule à fromage spécifique et la cuve de fromagerie utilisée pour préparer ce caillé ("ensemble de données 1") ;
(iii) la marque spécifique au moule à fromage correspondant à l'identifiant 2 est détectée sur chaque produit de fromage sans croûte mis en forme par des moyens de détection après le saumurage et les données spécifiques au moule à fromage ainsi obtenues sont mises en correspondance avec l'ensemble de données 1 du même moule à fromage, pour ainsi obtenir un ensemble de données qui identifie, pour chaque produit de fromage sans croûte mis en forme conditionné sous film, le lot de production spécifique et le moule à fromage spécifique, les moyens de séparation du lactosérum et la cuve de fromagerie utilisés pour préparer ce produit de fromage sans croûte mis en forme conditionné sous film ("ensemble de données 2") ; et
(iv) l'ensemble de données 2 est stocké et converti en un identifiant unique ("identifiant de produit") qui est appliqué sur l'extérieur du produit de fromage sans croûte mis en forme conditionné sous film.

2. Procédé selon la revendication 1, dans lequel le produit de fromage sans croûte mis en forme conditionné sous film est en forme de bloc.

3. Procédé selon la revendication 1 ou 2, dans lequel les moyens de séparation du lactosérum comprennent au moins deux colonnes d'égouttage du lactosérum, de préférence des tours d'égouttage du lactosérum formant des blocs.

4. Procédé selon l'une quelconque des revendications précédentes, dans lequel l'identifiant 1 est un signe, comprenant de préférence au moins un chiffre et/ou au moins une lettre, imprimé sur ou gravé dans la paroi extérieure du moule à fromage ou fixé par tout autre moyen à la paroi extérieure du moule à fromage.

5. Procédé selon la revendication 4, dans lequel les moyens de détection utilisés pour lire l'identifiant 1 sont une caméra de type capteur de vision.

6. Procédé selon l'une quelconque des revendications 1 à 3, dans lequel l'identifiant 1 est un code unique lisible à partir d'une puce qui est incorporée dans la paroi du moule à fromage ou fixée à la paroi intérieure ou extérieure du moule à fromage.

7. Procédé selon la revendication 6, dans lequel les moyens de détection utilisés pour lire l'identifiant 1 sont un dispositif de lecture par balayage apte à lire la puce.

8. Procédé selon l'une quelconque des revendications précédentes, dans lequel l'identifiant 2 est une gravure unique spécifique au moule à fromage dans la paroi intérieure du moule à fromage, qui laisse un relief correspondant à l'identifiant 2 sur la surface extérieure du produit de fromage sans croûte mis en forme lors du pressage de ce produit de fromage à l'intérieur du moule à fromage.

9. Procédé selon l'une quelconque des revendications précédentes, dans lequel la marque spécifique au moule à fromage correspondant à l'identifiant 2 est lue après le saumurage et avant le conditionnement sous film du produit de fromage sans croûte mis en forme.

10. Procédé selon l'une quelconque des revendications précédentes, dans lequel les moyens de détection pour lire la marque spécifique au moule à fromage correspondant à l'identifiant 2 sont une caméra de type capteur de vision.

11. Procédé selon l'une quelconque des revendications précédentes, dans lequel l'identifiant de produit comprend un numéro de lot destiné à identifier le lot et un numéro de série destiné à identifier la cuve de fromagerie, les moyens de séparation du lactosérum et le moule à fromage spécifiques utilisés pour préparer le produit de fromage sans croûte mis en forme conditionné sous film.

12. Procédé selon l'une quelconque des revendications 1 à 10, dans lequel l'identifiant de produit est un code QR ou un code-barres.

13. Procédé selon l'une quelconque des revendications précédentes, comprenant les étapes suivantes
(a) préparation d'au moins un lot d'un mélange de caillé-lactosérum dans au moins une cuve de fromagerie, un numéro de lot étant attribué au lot ;
(b) séparation du lactosérum du mélange caillé-lactosérum dans plusieurs colonnes d'égouttage formant des blocs ;
(c) transfert des blocs de fromage ainsi obtenus dans des moules à fromage en forme de bloc, chaque moule à fromage étant pourvu d'un identifiant 1 et d'un identifiant 2 ;
(d) détection de l'identifiant 1 à l'aide de moyens de détection appropriés et création d'un ensemble de données 1 pour chaque moule à fromage ;
(e) pressage des blocs de fromage à l'intérieur des moules ;
(f) retrait des blocs de fromage des moules ;
(g) saumurage des blocs de fromage ;
(h) détection de la marque spécifique au moule à fromage correspondant à l'identifiant 2 sur chaque bloc de fromage à l'aide de moyens de détection appropriés et création d'un ensemble de données 2 pour chaque bloc de fromage ;
(i) conversion de l'ensemble de données 2 en un identifiant de produit unique ;
(j) conditionnement sous film de chaque bloc de fromage sans croûte ; et
(k) application de l'identifiant de produit sur chaque bloc de fromage sans croûte conditionné sous film.
